# EUROPEAN PATENT SPECIFICATION

(11) **EP 1 749 150 B1**
(45) Date of publication and mention of the grant of the patent: **22.04.2009**
(21) Application number: 05746180.8
(22) Date of filing: 24.05.2005
(51) Int. Cl.: F02G 1/043, F16K 17/38

(54) **A STIRLING ENGINE**
STIRLING-MOTOR
MOTEUR STIRLING

(30) Priority: 25.05.2004 GB 0411693
(43) Date of publication of application: 07.02.2007
(73) Proprietor: Microgen Energy Limited, Reading, Berkshire RG6 1PT (GB)
(72) Inventor: WILLIAMS, John Stephen, Bromsgrove Worcestershire B20 2RP (GB); ALDERSON, John Howard, Bourne Lincolnshire PE10 9QU (GB)
(74) Representative: Draper, Martyn John
(86) International application number: PCT/GB2005/002060
(87) International publication number: WO 2005/116435

(56) References cited:
- US-A- 3 509 719
- US-A- 3 894 911
- US-A- 5 419 357
- PATENT ABSTRACTS OF JAPAN vol. 2000, no. 24, 11 May 2001 (2001-05-11) & JP 2001 201218 A (MITSUBISHI ELECTRIC CORP), 27 July 2001 (2001-07-27)

## Description

The present invention relates to a Stirling engine. More particularly, the present invention relates to a Stirling engine for use in a domestic combined heat and power (DCHP) system.

The housing of the Stirling engine is a pressure vessel. Under extreme circumstances, such as an external fire, the temperature and pressure within this vessel can rise to levels which threaten the integrity of the pressure vessel which could lead to catastrophic failure of the pressure vessel in a hazardous manner. For this reason, a relief valve is used. Pressure relief valves are known which have a reusable design. These are provided as a separate component which is installed into the casing during final assembly. This involves a separate component and a welding step which introduces the possibility of damage to the valve or casing. Alternatively the separate component may be screwed into the casing (see for example GB2,286,804 and JP 2002-286138). However, in order to avoid leakage through the threads a screw threaded connection requires a further component in the form of an O-ring, gasket, sealing paste or other such device to seal with the casing and this introduces further complexity.

The present invention aims to provide a relief valve for a Stirling engine which is simple to manufacture, and which will not be damaged during the assembly process.

According to a first aspect of the present invention there is provided a Stirling engine comprising a pressure vessel, and a plug cast into the pressure vessel with a lower melting point than the material of the pressure vessel and which is designed to melt to vent the pressure in the engine if the pressure vessel exceeds a threshold temperature;
wherein the pressure vessel comprises a casing with a helium fill pipe or an electrical connector attached to the casing, wherein the plug is cast into the helium fill pipe or electrical connector.

By providing a fusible plug which is cast into the pressure vessel, the present invention simplifies the manufacturing process and avoids the risk of damaging any valve components during assembly. The invention also eliminates the need for the separate component containing the fusible material and also for the seal associated with a screw threaded joint.

The plug is preferably made of a eutectic compound with a melting point of between 130 and 160°C and preferably around 140°C.

According to a second aspect of the present invention there is provided a method of manufacturing a Stirling engine, the engine comprising a pressure vessel including a fill pipe, the method comprising the steps of inserting into the pipe a plug with a lower melting point than material of the pressure vessel; preventing the plug from passing through the pipe; providing a flow passage through the pipe around or through the plug; connecting a supply of working gas to the pipe and filling the engine; sealing the fill pipe; removing the supply of working gas; heating the pipe to melt the plug; allowing the plug to solidify across the width of the pipe; and forming a hole in the pipe to provide a path for the gas to the exterior of the pressure vessel if the plug material melts in use.

An example of a Stirling engine constructed in accordance with the present invention will now be described with reference to the accompanying drawings, in which:
Fig. 1 is a schematic sketch showing the basic components of a Stirling engine included for background interest only;
Fig. 2 shows the portion of the wall of the Stirling engine housing marked II in Fig. 1 in greater detail;
Fig. 3 shows a portion of the wall of a housing of a Stirling engine according to an example of the first aspect of the invention;
Figs. 4A - 4F illustrate a method of manufacturing a Stirling engine in accordance with the first aspect of the present invention to produce a Stirling engine according to a second example of the first aspect of the invention; and
Fig. 5 shows an electrical connector for use with a Stirling engine in accordance with a further example of a first aspect of the invention.

The Stirling engine is a linear free piston engine which is well known in the art. A typical engine is shown, for example, in WO 03/052254.

The engine has a head 1 at one end surrounded by a plurality of fins 2 and an alternator 3 at the opposite end. Heat is input into the engine head 2 and withdrawn from an intermediate region 4 while displacer and power pistons reciprocate within the casing to generate electrical power at the alternator 3. The engine is housed in a casing 5 which is generally a two-part housing in which the two parts are pressed from sheet metal and welded together once all of the engine components are installed to provide a sealed pressure vessel.

In order to provide a pressure relief function, a fusible plug 6 is provided in the lower part of the engine. The plug 6 is made from a low melting point alloy such as a eutectic compounds with a melting point of around 140°C. A stepped bore 5A is provided to anchor the fusible plug. The surface area of the plug exposed to the outside of the casing 5 is considerably smaller than the area exposed to the pressurised inside of the casing. This prevents the pressure within the casing from blowing the plug out of the casing. The plug is cast into its location within the housing stepped bore 5A as a secondary lower temperature process to the manufacturing of the casing itself. This avoids the need to weld a plug holder into the casing during assembly and therefore reduces the likelihood of damage either to the plug or the casing. Once the pressure vessel is assembled, leak testing can be performed on the assembly ensuring that it is operating correctly.

The incorporation of the fusible plug 6 means that, in the event of excessive temperatures, due to, for example, a fire, the plug would melt and the pressure vessel would safely discharge the internal gas pressure. This would prevent the internal engine gas pressure increasing due to higher external temperatures and thereby avoid the occurrence of a potential hazard.

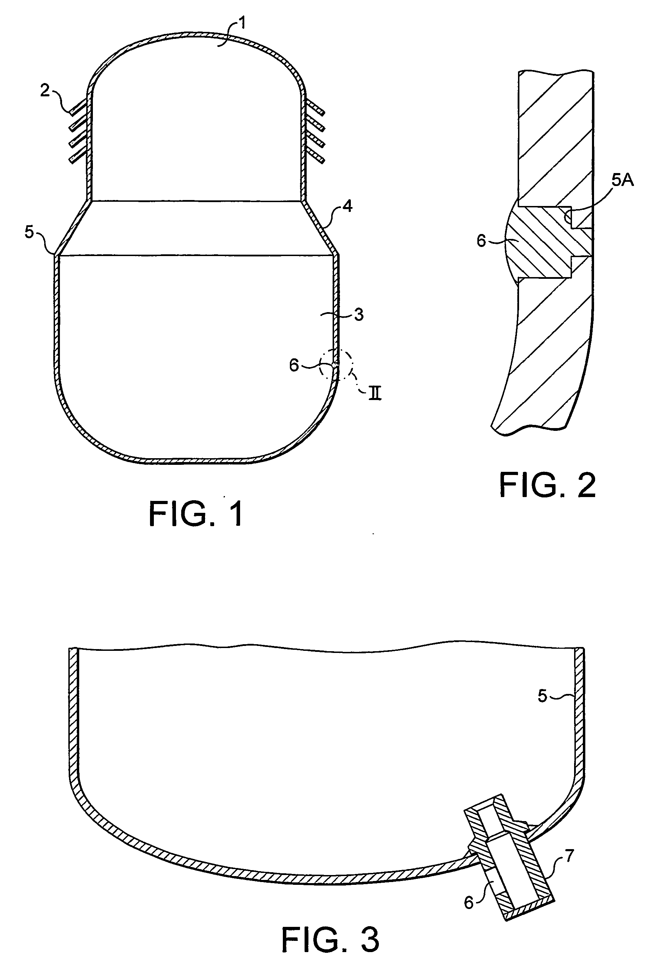

An example of the invention is shown in Fig. 3. In this case, a helium fill pipe 7 is welded to the casing 5. Alternatively, it may be cast as part of the casing. This pipe is used to fill the engine with helium. The fusible plug 6 is cast into the helium fill pipe 7 after the pipe has been welded to the casing.

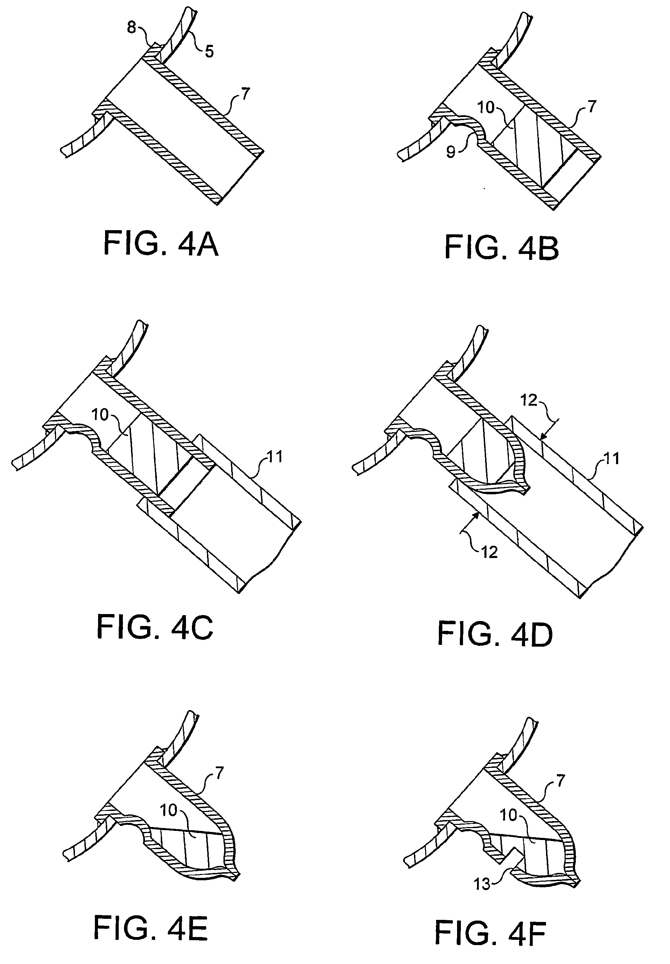

A second example of the invention is illustrated in Figs. 4A - 4F which show the various steps in the formation of the plug in the helium fill pipe 7. As shown in Fig. 4A, the casing 5, which is pressed from a sheet, is provided with a helium fill pipe 7 which is soldered in place using silver solder 8. The engine is then assembled. A dimple 9 is created in the fill pipe 7 as shown in Pig. 4B and a plug 10 of eutectic material is inserted into the pipe. The dimple 9 prevents the plug 10 from passing into the casing 5. It should be noted that a dimple 9 could be any form of internal projection or projections which prevents the further passage of the plug 10 and may either be formed in situ as shown, or may be formed before the pipe 7 is attached to the casing 5. The plug 10 has an external cross-section which is different from the internal cross-section of the pipe 7. This creates a flow path around the plug 10 for reasons described below. The difference in cross-section may take the form of one or more slots in the outer wall of the plug.

As shown in Fig. 4C, a tube 11 connected to a source of helium is then connected to the fill pipe 7 and the engine is filled with helium which passes around the plug 10 along the flow paths described above. Before the tube 11 is removed, the end of the pipe 7 is sealed by being crimped in the direction of arrows 12 and ultrasonically welded as shown in 4D.

Once sealed, the tube 11 can be removed. At this point, the plug 10 is melted by localised heat such as a blow torch applied to the outside of the pipe 7, or by induction heating such that the plug seals across the pipes as shown in Figs. 4E. Once the plug has cooled and solidified, a hole 13 is then formed, for example by drilling, through the wall of the pipe 7 and into but not through the plug 10 as shown in Fig. 4F.

As can be seen from Fig. 4F, another advantage of this arrangement is that the plug 10 effectively forms a seal for the crimped end of the pipe 7. Although the pipe has been ultrasonically welded, leakage is still possible over the lifetime of the engine, so the additional sealing provided by the plug 10 provides useful back up protection.

If the casing 5 overheats in use, the plug will melt and the gas will vent through hole 13.

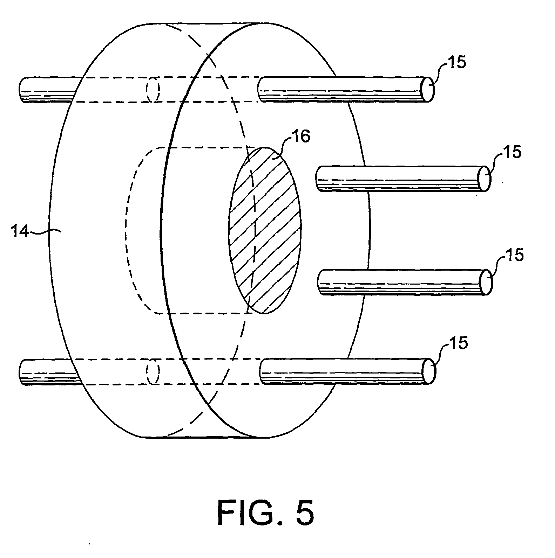

In the third example the casing 5 is provided with an electrical connector 14 to the alternator as shown in Fig. 5. The connector has three leads 15 which connect to the alternator. The fusible plug 16 is cast into this connector. In a similar manner to the first example, the fusible plug is cast after the electrical connector is welded to the casing 5.

## Claims

1. A Stirling engine comprising a pressure vessel (5), and a plug (10, 16) cast into the pressure vessel with a lower melting point than the material of the pressure vessel and which is designed to melt to vent the pressure in the engine if the pressure vessel exceeds a threshold temperature; the pressure vessel comprises a casing with a helium fill pipe (7) or an electrical connector (14) attached to the casing, wherein the plug is cast into the helium fill pipe or electrical connector.

2. A Stirling engine according to claim 1, wherein the plug (10, 16) is made of a eutectic compound.

3. A method of manufacturing a Stirling engine, the engine comprising a pressure vessel (5) including a fill pipe (7), the method comprising the steps of inserting into the pipe a plug (10) with a lower melting point than material of the pressure vessel; preventing the plug from passing through the pipe; providing a flow passage through the pipe around or through the plug; connecting a supply (11) of working gas to the pipe and filling the engine; sealing the fill pipe; removing the supply of working gas; heating the pipe to melt the plug; allowing the plug to solidify across the width of the pipe; and forming a hole (13) in the pipe to provide a path for the gas to the exterior of the pressure vessel if the plug material melts in use.

## Patentansprüche

1. Stirling-Maschine mit einem Druckkessel (5) und einem Stopfen (10, 16), der in den Druckkessel gegossen ist und einen niedrigeren Schmelzpunkt als das Material des Druckkessels aufweist und so gestaltet ist, dass er schmilzt, um den Druck in der Maschine abzulassen, wenn der Druckkessel eine Schwellentemperatur überschreitet; wobei der Druckkessel ein Gehäuse mit einem Heliumeinfüllrohr (7) oder einem elektrischen Verbinder (14), die am Gehäuse angebracht sind, umfasst, wobei der Stopfen in das Heliumeinfüllrohr oder den elektrischen Verbinder eingegossen ist.

2. Stirling-Maschine nach Anspruch 1, wobei der Stopfen (10, 16) aus einer eutektischen Verbindung gefertigt ist.

3. Verfahren zur Herstellung einer Stirling-Maschine, wobei die Maschine einen Druckkessel (5) umfasst, der ein Einfüllrohr (7) enthält, und wobei das Verfahren die Schritte umfasst: Einsetzen eines Stopfens (10) mit einem niedrigeren Schmelzpunkt als das Material des Druckkessels in das Rohr; Hindern des Stopfens an einem Durchrutschen durch das Rohr; Schaffen eines Strömungsdurchlasses durch das Rohr um oder durch den Stopfen; Verbinden einer Zuleitung (11) für Arbeitsgas mit dem Rohr und Befüllen der Maschine; Verschließen des Einfüllrohres; Entfernen der Zuleitung für das Arbeitsgas; Erhitzen des Rohres, um den Stopfen zu schmelzen; Erlauben einer Verfestigung des Stopfens über die Breite des Rohres; und Ausbilden eines Loches (13) im Rohr, um einen Weg für das Gas nach außerhalb des Druckkessels zu schaffen, falls das Stopfenmaterial im Gebrauch schmilzt.

## Revendications

1. Moteur Stirling comprenant une cuve sous pression (5), et un bouchon (10, 16) coulé dans la cuve sous pression avec un point de fusion plus bas que le matériau de la cuve sous pression et qui est conçu pour fondre pour détendre la pression dans le moteur si la cuve sous pression dépasse une température de seuil; la cuve sous pression comprend un boîtier avec un tube de remplissage à hélium (7) ou un connecteur électrique (14) fixé au boîtier, où le bouchon est coulé dans le tube de remplissage à hélium ou le connecteur électrique.

2. Moteur Stirling selon la revendication 1, dans lequel le bouchon (10, 16) est réalisé à partir d'un composé eutectique.

3. Procédé de fabrication d'un moteur Stirling, le moteur comprenant une cuve sous pression (5) incluant un tube de remplissage (7), le procédé comprenant les étapes consistant à insérer dans le tube un bouchon (10) ayant un point de fusion plus bas que le matériau de la cuve sous pression; empêcher que le bouchon passe à travers le tube; réaliser un passage d'écoulement à travers le tube autour ou à travers le bouchon; connecter une alimentation (11) d'un gaz de travail au tube et remplir le moteur; rendre étanche le tube de remplissage; retirer l'alimentation du gaz de travail; chauffer le tube pour faire fondre le bouchon; permettre au bouchon de se solidifier sur la largeur du tube; et former un trou (13) dans le tube pour réaliser un chemin pour le gaz vers l'extérieur de la cuve sous pression si le matériau de bouchon fond en cours d'utilisation.
